# EUROPÄISCHE PATENTSCHRIFT

(11) **EP 2 686 215 B1**
(45) Veröffentlichungstag und Bekanntmachung des Hinweises auf die Patenterteilung: **22.05.2019**
(21) Anmeldenummer: 12709853.1
(22) Anmeldetag: 15.03.2012
(51) Int. Cl.: B60T 17/00, B01D 53/26

(54) **LUFTTROCKNERADAPTERMODUL, LUFTTROCKNERMODUL UND DRUCKLUFTVERSORGUNGSEINRICHTUNG**
AIR DRYER MODULE ADAPTER, AIR DRYER MODULE AND COMPRESSED AIR SUPPLY DEVICE
MODULE ADAPTATEURET MODULE DE DESSICCATEUR D'AIR, ET
DISPOSITIF D'ALIMENTATION EN AIR COMPRIMÉ

(30) Priorität: 17.03.2011 DE 102011014274
(43) Veröffentlichungstag der Anmeldung: 22.01.2014
(73) Patentinhaber: KNORR-BREMSE Systeme für Nutzfahrzeuge GmbH, 80809 München (DE)
(72) Erfinder: ZEMAN, Ferenc, H-1114 Budapest (HU)
(86) Internationale Anmeldenummer: PCT/EP2012/054559
(87) Internationale Veröffentlichungsnummer: WO 2012/123542

(56) Entgegenhaltungen:
- EP-A1- 0 009 139
- EP-A1- 0 199 948
- EP-A1- 0 933 117
- DE-A1- 3 231 519
- DE-A1- 3 525 083
- DE-A1- 3 533 893
- FR-A1- 2 537 013
- US-A- 5 378 266

## Beschreibung

Die vorliegende Erfindung betrifft ein Lufttrockneradaptermodul zur Aufnahme einer ersten Lufttrocknerpatrone und einer zweiten Lufttrocknerpatrone, ein Lufttrocknermodul und eine Druckluftversorgungseinrichtung.

Moderne Nutzfahrzeuge weisen häufig Druckluftsysteme auf, beispielsweise Druckluftbremsen. Um diese System mit Druckluft zu versorgen, wird Druckluft von einem Kompressor bereitgestellt und von einer Luftaufbereitungsanlage weitergeleitet und auf Verbrauchersysteme verteilt. Dazu kann eine Luftaufbereitungsanlage beispielsweise ein entsprechendes Mehrkreisschutzventil aufweisen. Um zu verhindern, dass sich Feuchtigkeit in den Verbrauchersystemen absetzt, werden Lufttrockner mit Filtern eingesetzt. Häufig sind Lufttrockner in der Form einer austauschbaren Lufttrocknerpatrone ausgebildet. Ein Lufttrockner nimmt Feuchtigkeit aus der Luft auf und kann regeneriert werden, indem ein Luftstrom durch ihn geleitet wird, der eine einer Strömungsrichtung im Förderbetrieb entgegengesetzte Strömungsrichtung aufweist und zur Atmosphäre geleitet wird. Bei Nutzfahrzeugen mit sehr hohem Bedarf an komprimierter Luft kann es vorkommen, dass durch die hohe Belastung der Druckluftversorgung ein einzelner Lufttrockner beziehungsweise eine Lufttrocknerpatrone nicht ausreichend regeneriert werden kann. Denn bei hohem Bedarf an komprimierter Luft ergeben sich seltener Möglichkeiten, den Luftstrom durch den Lufttrockner umzukehren. Um zu vermeiden, dass bei derartigen Nutzfahrzeugen die Druckluftsysteme nass gefahren werden, können zwei Lufttrocknerpatronen im Wechsel eingesetzt werden. Somit kann eine Patrone zum Trocknen von Luft eingesetzt werden, und die zweite Patrone kann regeneriert werden. Es ist allerdings aufwendig, schon bestehende Druckluftversorgungseinrichtungen so abzuändern, dass sie mit mehr als einer Lufttrocknerpatrone betrieben werden können.

Der Erfindung liegt die Aufgabe zugrunde, ein Lufttrockneradaptermodul bereitzustellen, welches eine Verwendung von zwei Lufttrocknerpatronen auch bei Systemen ermöglicht, die für eine einzelne Lufttrocknerpatrone ausgelegt sind. Insbesondere soll das Adaptermodul sich unabhängig davon verwenden lassen, ob eine Druckluftversorgungsanlage pneumatisch oder elektropneumatisch angesteuert ist Das gattungsgemässe Dokument EP 0 009 139 A1 beschreibt ein Trocknerwechsel abhängig von Strömung, Temperaturen, Druck und Regenerationsdruck.

Diese Aufgabe wird durch die Merkmale der unabhängigen Ansprüche gelöst. Vorteilhafte Ausgestaltungen und Weiterbildungen der Erfindung ergeben sich aus den abhängigen Ansprüchen.

Erfindungsgemäß ist ein Lufttrockneradaptermodul für Nutzfahrzeuge zur Aufnahme einer ersten Lufttrocknerpatrone und einer zweiten Lufttrocknerpatrone vorgesehen. Das Lufttrockneradaptermodul umfasst eine erste Anschlussvorrichtung zum Anschluss der ersten Lufttrocknerpatrone, eine zweite Anschlussvorrichtung zum Anschluss der zweiten Lufttrocknerpatrone und ein Auswahlventil mit einem Ventileingang, einem ersten Ventilausgang und einem zweiten Ventilausgang. Der erste Ventilausgang ist mit der ersten Anschlussvorrichtung verbunden oder verbindbar, der zweite Ventilausgang ist mit der zweiten Anschlussvorrichtung verbunden oder verbindbar und der Ventileingang ist für eine Druckluftzufuhr verbunden oder verbindbar. Das Auswahlventil weist eine erste Schaltstellung auf, in welcher der Ventileingang mit dem ersten Ventilausgang verbunden ist, sowie eine zweite Schaltstellung, in welcher der Ventileingang mit dem zweiten Ventilausgang verbunden ist. Ferner ist ein Modulausgang des Lufttrockneradaptermoduls umschaltbar mit der ersten Anschlussvorrichtung oder der zweiten Anschlussvorrichtung verbunden oder verbindbar. Somit kann über das Auswahlventil entweder eine erste Lufttrocknerpatrone oder eine zweite Lufttrocknerpatrone von über die Druckluftzufuhr geförderter Druckluft durchströmt werden, so dass sie über den Modulausgang das Adaptermodul getrocknet verlassen kann. Eine Anschlussvorrichtung für eine Lufttrocknerpatrone kann einen Eingangsanschluss und einen Ausgangsanschluss aufweisen. Der Eingangsanschluss der Anschlussvorrichtung kann mit einem zugeordneten Ventilausgang des Auswahlventils verbunden oder verbindbar sein. Der Ausgangsanschluss der Anschlussvorrichtung kann mit dem Modulausgang verbunden oder verbindbar sein. Im montierten Zustand einer Lufttrocknerpatrone, wenn diese an die zugeordnete Anschlussvorrichtung angeschlossen ist, kann eine Verbindung zwischen dem Eingangsanschluss der Anschlussvorrichtung und dem Ausgangsanschluss der gleichen Anschlussvorrichtun g über die montierte Lufttrocknerpatrone hergestellt oder herstellbar sein. Zum Anschluss einer Lufttrocknerpatrone kann eine Anschlussvorrichtung eine Befestigungseinrichtung aufweisen, über welche die Patrone an der Anschlussvorrichtung und somit am Adaptermodul befestigt werden kann. Beispielsweise können ein Bajonettverschluss und/oder eine geeignete Verschraubung vorgesehen sein. Es kann jeweils eine Versorgungsleitung vorgesehen sein, welche einen der Ventilausgänge des Auswahlventils mit der zugeordneten Anschlussvorrichtung und/oder dem Modulausgang verbindet oder zu verbinden vermag. Über eine solche Versorgungsleitung kann eine Förderung von Druckluft und/oder bei umgekehrter Strömungsrichtung eine Regenerierung einer montierten zugeordneten Lufttrocknerpatrone erfolgen. Ein Umschalten der Verbindung des Modulausgangs mit einer der Anschlussvorrichtungen kann beispielsweise über ein geeignetes Ventil erfolgen. Im Rahmen dieser Beschreibung stellt eine Verbindung oder fluidleitende Verbindung zwischen zwei pneumatischen Komponenten oder einer Leitung und einer pneumatischen Komponente wie einem Ventil eine pneumatische Verbindung dar, so dass Druckluft über die Verbindung geführt werden kann. Eine Verbindung kann beispielsweise durch Anschließen einer Leitung oder das Öffnen eines Ventils herstellbar sein. Ein Nutzfahrzeug kann insbesondere ein Lastkraftwagen oder ein mobiles Arbeitsgerät sein, wie beispielsweise ein Traktor. Auch ein Schienenfahrzeug kann als ein Nutzfahrzeug angesehen werden. Der Modulausgang kann für eine Verbindung mit einer Luftaufbereitungsanlage vorgesehen sein. Eine Luftaufbereitungsanlage kann dazu ausgebildet sein, von einem Kompressor bereitgestellte Druckluft auf Verbrauchersysteme wie beispielsweise Druckluftbremsen und/oder Druckluftreservoirs eines Fahrzeugs zu verteilen. Insbesondere kann eine Luftaufbereitungsanlage ein Mehrkreisschutzventil aufweisen. Es ist vorstellbar, dass eine Luftaufbereitungsanlage eine elektronische Steuereinrichtung zu Ansteuerung elektropneumatischer Komponenten aufweist. Ein Kompressor kann derart ausgebildet sein, dass er in einem Fördermodus und einem Energiesparmodus betrieben werden kann. In dem Fördermodus kann ein Kompressor Druckluft zur Versorgung der Luftaufbereitungsanlage beziehungsweise zugeordneter Verbraucher bereitstellen. Im Energiesparmodus kann die Förderleistung des Kompressors stark herabgesetzt sein, oder der Kompressor kann abgeschaltet oder von einer Antriebswelle entkuppelt sein. Allgemein kann vorgesehen sein, dass in einem Energiesparmodus der Ventileingang des Auswahlventils unter im Vergleich zum Fördermodus des Kompressors geringerem Druck steht, etwa weil er entlüftet oder mit der Atmosphäre verbunden ist. Der Kompressor kann durch eine mit dem Adaptermodul verbundene Luftaufbereitungseinrichtung zwischen dem Fördermodus und dem Energiesparmodus umschaltbar sein, beispielsweise nach Maßgabe einer elektronischen Steuereinrichtung. Das Auswahlventil kann ein rein pneumatisch schaltbares Ventil sein. Es kann auch vorgesehen sein, dass das Auswahlventil elektropneumatisch schaltbar ist. Dabei kann das Auswahlventil beispielsweise zur Ansteuerung an eine elektronische Steuereinrichtung der Luftaufbereitungsanlage angeschlossen oder anschließbar sein. Das Auswahlventil kann in diesem Zusammenhang als ein Magnetventil ausgebildet sein oder als ein Ventil mit elektrisch ansteuerbaren Komponenten zur Vorsteuerung. Eine Druckluftzufuhr kann beispielsweise über einen oben beschriebenen Kompressor erfolgen. Insbesondere kann der Ventileingang des Auswahlventils mit einer Förderleitung des Kompressors verbunden sein, über welche der Kompressor Druckluft bereitstellt. Dazu kann der Ventileingang mit einem Moduleingang verbunden oder verbindbar sein, welcher wiederum mit dem Kompressor verbunden oder verbindbar sein kann. Das Adaptermodul kann von den Lufttrocknerpatronen separat ausgebildet sein. Entsprechend kann ein Adaptermodul, das mit einer ersten Lufttrocknerpatrone und einer zweiten Lufttrocknerpatrone bestückt ist, als ein Lufttrocknermodul bezeichnet werden. Das Adaptermodul kann von einer Luftaufbereitungseinrichtung und/oder einem Kompressor separat ausgebildet sein, so dass es sich modulartig in eine Druckluftversorgungseinrichtung einfügen lässt. Dabei kann vorgesehen sein, dass sich das Adaptermodul und/oder das Lufttrocknermodul separat von anderen Komponenten austauschen oder ersetzen lassen. Insbesondere kann vorgesehen sein, dass ein Lufttrocknermodul nur über einen Moduleingang und einen Modulausgang pneumatisch mit anderen Komponenten einer Druckluftversorgungseinrichtung wie einem Kompressor und einer Luftaufbereitungseinrichtung verbunden werden muss, um als Lufttrockner funktionsfähig sein. Erfindungsgemäss ist es vorgesehen dass das Auswahlventil abhängig von einem Betriebsmodus des Kompressors zwischen seinen Schaltstellungen umschaltet oder umgeschaltet wird. Insbesondere kann das Adaptermodul derart ausgebildet sein, dass das Auswahlventil eine andere Schaltstellung einnimmt, wenn der Kompressor in seinen Energiesparmodus schaltet beziehungsweise der Druck am Ventileingang des Auswahlventils abfällt, etwa weil eine mit dem Ventileingang verbundene Förderleitung entlüftet wird. Alternativ erfindungsgemäss ist es vorgesehen, dass das Auswahlventil eine andere Schaltstellung einnimmt, wenn über den Modulausgang ein pneumatisches Signal eintritt, etwa dann, wenn eine an den Modulausgang angeschlossene Luftaufbereitungsanlage in einen Regenerierungsmodus umschaltet. Ein damit verbundener Luftstrom kann vom Modulausgang derart zum Auswahlventil geleitet sein, dass das Auswahlventil eine andere Schaltstellung einnimmt. Die Schaltstellung, welche das Auswahlventil bei Beginn einer Inbetriebnahme einnimmt, kann durch äußere Umstände im Wesentlichen zufällig festgelegt sein. Das Lufttrockneradaptermodul ist derart ausgelegt, dass eine hinreichend häufige Umschaltung einer Lufttrocknerpatrone zwischen Förderbetrieb und Regenerierung erfolgt, um beide Lufttrocknerpatronen ausreichend trocken zu halten. Das Lufttrockneradaptermodul kann an eine Förderleitung eines Kompressors anschließbar sein, beispielsweise zwischen einen Kompressor und eine Luftaufbereitungsanlage, welche insbesondere ein Mehrkreisschutzventil aufweisen kann. Dabei kann eine eventuell in der Luftaufbereitungsanlage vorgesehene oder vorhandene Lufttrocknerpatrone entweder beibehalten werden, oder sie kann entfernt werden. Im letzteren Fall kann eine luftdichte Abdeckung eines der fehlenden Lufttrocknerpatrone zugeordneten Anschlusses erforderlich sein. Alternativ oder zusätzlich kann das Lufttrockneradaptermodul mit einem Anschluss versehen sein, über den es mit einem Lufttrocknerpatronenanschluss an einer Luftaufbereitungsanlage verbindbar ist. Somit kann eine herkömmliche Lufttrocknerpatrone durch das Lufttrockneradaptermodul ersetzt werden, ohne dass weitere Anpassungen an der Luftaufbereitungsanlage notwendig wären.

Das Auswahlventil kann pneumatisch zum Umschalten zwischen der ersten Schaltstellung und der zweiten Schaltstellung ansteuerbar sein. Somit kann das Adaptermodul sowohl für herkömmliche pneumatische Luftaufbereitungsanlagen, als auch für semielektronische oder elektronisch gesteuerte Luftaufbereitungsanlagen eingesetzt werden. Insbesondere kann es zweckmäßig sein, wenn die Ansteuerung des Auswahlventils von innerhalb des Adaptermoduls erfolgt. Dazu können beispielsweise ein oder mehrere Steuereingänge des Auswahlventils innerhalb des Adaptermoduls jeweils mit einer Versorgungsleitung verbunden oder verbindbar sein, die mit dem Ventileingang des Auswahlventils und/oder einem Moduleingang oder Modulausgang verbunden oder verbindbar sind.

Das Lufttrockneradaptermodul kann ein Ausgangsventil aufweisen, welches es vermag, die erste Anschlussvorrichtung und/oder die zweite Anschlussvorrichtung mit dem Modulausgang zu verbinden. Somit kann gezielt eine Verbindung zwischen einer der Anschlussvorrichtungen und dem Modulausgang hergestellt werden. Insbesondere kann ein Umschalten einer Verbindung des Modulausgangs mit einer der Anschlussvorrichtungen durch das Ausgangsventil erfolgen. Das Ausgangsventil kann ein ansteuerbares Ventils ein, etwa ein pneumatisch oder elektrisch ansteuerbares Ventil. Es kann als 3/2-Wegeventil und/oder Wechselventil ausgebildet sein. Das Ausgangsventil kann einen ersten Eingang aufweisen, der mit der ersten Anschlussvorrichtung, insbesondere einem Ausgangsanschluss der ersten Anschlussvorrichtung, verbunden oder verbindbar ist. Ein zweiter Eingang des Ausgangsventils kann mit der zweiten Anschlussvorrichtung, insbesondere einem Ausgangsanschluss der zweiten Anschlussvorrichtung, verbunden oder verbindbar ist. Ein Ausgang des Ausgangsventils kann mit dem Modulausgang verbunden oder verbindbar sein. Insbesondere kann vorgesehen sein, dass in der ersten Schaltstellung des Auswahlventils das Ausgangsventil derart angesteuert ist, dass es eine Verbindung zwischen der ersten Anschlussvorrichtung und dem Modulausgang und/oder eine Verbindung zwischen dem ersten Eingang des Ausgangsventils und dem Ausgang des Ausgangsventils herstellt. Es kann vorgesehen sein, dass in der zweiten Schaltstellung des Auswahlventils das Ausgangsventil derart angesteuert ist, dass es eine Verbindung zwischen der zweiten Anschlussvorrichtung und dem Modulausgang und/oder eine Verbindung zwischen dem zweiten Eingang des Ausgangsventils und dem Ausgang des Ausgangsventils herstellt.

Bei einer Weiterbildung kann das Ausgangsventil ein Select-High-Ventil sein. Als ein Select-High-Ventil kann ein Ventil bezeichnet werden, welches wie oben beschrieben einen ersten Eingang, einen zweiten Eingang und einen Ausgang aufweist. Das Select-High-Ventil ist derart ausgebildet, dass es denjenigen seiner Eingänge mit seinem Ausgang verbindet, an welchem der höhere Druck anliegt. Der andere Eingang mit dem niedrigeren Druck kann abgesperrt sein. Ändern sich die Druckverhältnisse, kann ein Select-High-Ventil entsprechend umschalten. Durch ein derartiges Select-High-Ventil kann somit auf einfache Weise derjenige der Ventilausgänge des Auswahlventils mit dem Modulausgang verbunden werden, über den Druckluft von einem Kompressor gefördert wird.

Das Lufttrockneradaptermodul kann ein Ablassventil aufweisen. Über ein Ablassventil kann eine Verbindung zur Atmosphäre erfolgen, was beispielsweise eine Regenerierung ermöglichen kann. Das Ablassventil kann beispielsweise mit einem Luftablass des Lufttrockneradaptermoduls zum Entlüften zur Atmosphäre verbunden oder verbindbar sein. Es kann zweckmäßig sein, wenn das Ablassventil einen ersten Eingang, einen zweiten Eingang und einen Ausgang aufweist. Es kann derart ausgebildet sein, dass es in einer ersten Schaltposition seinen ersten Eingang mit seinem Ausgang verbindet und in einer zweiten Schaltposition seinen zweiten Eingang mit seinem Ausgang. Der erste Eingang kann, beispielsweise über eine Abzweigung von einer Versorgungsleitung, mit dem ersten Ventilausgang des Auswahlventils verbunden oder verbindbar sein. Der zweite Eingang kann, beispielsweise indem die Abzweigung mit der anderen Versorgungsleitung verbunden ist, mit dem zweiten Ventilausgang des Auswahlventils verbunden oder verbindbar sein. Insbesondere kann das Ablassventil in einer Abzweigung vorgesehen sein, welche zwischen zwei den Ventilausgängen zugeordneten Versorgungsleitungen angeordnet ist. Das Ablassventil kann ein pneumatisch oder elektrisch ansteuerbares Ventils sein. Es kann als ein Select-Low-Ventil ausgebildet sein, welches denjenigen seiner Eingänge mit seinem Ausgang verbindet, an welchem der niedrigere Druck anliegt.

Das Lufttrockneradaptermodul kann einen ersten Schaltmodus aufweisen, in welchem über die erste Lufttrocknerpatrone Druckluft vom Ventileingang des Auswahlventils zum Modulausgang geführt wird oder führbar ist, und einen zweiten Schaltmodus, in welchem über die zweite Lufttrocknerpatrone Druckluft vom Ventileingang des Auswahlventils zum Modulausgang geführt wird oder führbar ist. Somit kann wahlweise ein Förderluftstrom über die erste Lufttrocknerpatrone oder die zweite Lufttrocknerpatrone geleitet werden. Dazu kann ein eventuell vorhandenes Ausgangsventil geeignet angesteuert oder geschaltet sein. Der erste Schaltmodus und der zweite Schaltmodus können pneumatisch oder zumindest teilweise elektropneumatisch angesteuert oder ansteuerbar sein. Im ersten Schaltmodus kann das Auswahlventil die erste Schaltstellung einnehmen und der Modulausgang kann mit der ersten Anschlussvorrichtung verbunden oder verbindbar sein. Im zweiten Schaltmodus kann das Auswahlventil sich in der zweiten Schaltstellung befinden und der Modulausgang kann mit der zweiten Anschlussvorrichtung verbunden oder verbindbar sein.

Das Lufttrockneradaptermodul kann insbesondere dazu ausgebildet sein, im ersten Schaltmodus die zweite Lufttrocknerpatrone zu regenerieren. Dies ermöglicht es, gleichzeitig geförderte Druckluft über die erste Lufttrocknerpatrone zu trocknen und die zweite Lufttrocknerpatrone zu regenerieren. Es ist vorstellbar, dass das Adaptermodul dazu ausgebildet ist, im zweiten Schaltmodus die erste Lufttrocknerpatrone zu regenerieren.

Bei einer Weiterbildung kann vorgesehen sein, dass das Lufttrockneradaptermodul dazu ausgebildet ist, im ersten Schaltmodus zum Regenieren der zweiten Lufttrocknerpatrone Druckluft aus einer Leitung zu entnehmen, welche die erste Lufttrocknerpatrone mit dem Modulausgang und/oder einem Ausgangsventil verbindet. Es kann auch vorgesehen sein, dass Druckluft zum Regenerieren aus einer Leitung entnommen wird, welche den Ausgangsanschluss der ersten Anschlussvorrichtung mit dem Modulausgang und/oder einem Ausgangsventil verbindet. Entsprechend kann das Lufttrockneradaptermodul auch dazu ausgebildet sein, im zweiten Schaltmodus zum Regenieren der ersten Lufttrocknerpatrone Druckluft aus einer Leitung zu entnehmen, welche die zweite Lufttrocknerpatrone mit dem Modulausgang und/oder einem Ausgangsventil verbindet. Es kann auch vorgesehen sein, dass Druckluft zum Regenerieren aus einer Leitung entnommen wird, welche den Ausgangsanschluss der zweiten Anschlussvorrichtung mit dem Modulausgang und/oder einem Ausgangsventil verbindet. Somit kann die Regenerierung unabhängig von der Luftaufbereitungsanlage durchgeführt werden. Insbesondere kann auf einen Regenerierungsmodus der Luftaufbereitungsanlage verzichtet werden. Beispielsweise kann eine elektronische Steuereinrichtung derart umprogrammiert oder umgeschaltet werden, dass sie keine Regenerierung mehr einleitet. Zur Entnahme von Druckluft kann eine Regenerierungsleitung vorgesehen sein, welche einen Ausgang der ersten Anschlussvorrichtung mit einem Ausgang der zweiten Anschlussvorrichtung verbindet. Die Regenerierungsleitung kann dabei jeweils von einer Versorgungsleitung abzweigen, die eine der Anschlussvorrichtungen oder eine der Lufttrocknerpatronen mit einem Ausgangsventil und/oder dem Modulausgang verbindet. Es kann eine Regenerierungsdrossel vorgesehen sein, welche die für die Regenerierung vorgesehene Luft drosselt. Die Regenerierungsdrossel kann in einer Regenerierungsleitung angeordnet sein.

Das Auswahlventil kann einen ersten Steuereingang aufweisen, der pneumatisch mit dem zweiten Ventilausgang verbunden oder verbindbar ist. Der erste Steuereingang kann durch ein verschiebbares Ventilelement von einem Ventilraum pneumatisch getrennt sein, welcher mit dem ersten Ventilausgang und/oder dem zweiten Ventilraum pneumatisch verbunden oder verbindbar ist. Somit lässt sich auf einfache Art ein Umschalten des Auswahlventils erreichen. Ferner kann das Auswahlventil einen zweiten Steuereingang aufweisen, der pneumatisch mit dem ersten Ventilausgang verbunden oder verbindbar ist. Der zweite Steuereingang kann durch das verschiebbare Ventilelement von dem Ventilraum pneumatisch getrennt sein. Das verschiebbare Ventilelement kann in dem Ventilraum aufgenommen sein und je nach seiner Position das Auswahlventil derart schalten, dass über den Ventilraum der Ventileingang des Auswahlventil mit dem ersten Ventilausgang verbunden ist oder über den Ventilraum der Ventileingang mit dem zweiten Ventilausgang verbunden ist. Der jeweils andere Ventilausgang des Auswahlventils kann durch das Ventilelement abgesperrt sein. Das Ventilelement kann eine Kolbenstange mit einem Kolben und geeigneten Abdichtungen umfassen, die mit im Ventilraum vorgesehenen Ventilsitzen zusammenwirken. Somit kann das Ventilelement das Auswahlventil pneumatisch zwischen der ersten Schaltstellung und der zweiten Schaltstellung umschalten. Dabei ist vorstellbar, dass in einer den ersten Steuereingang mit dem zweiten Ventilausgang verbindenden Steuerleitung eine Drossel vorgesehen ist. Auch in einer den zweiten Steuereingang mit dem ersten Ventilausgang verbindenden Steuerleitung kann eine Drossel angeordnet sein. Diese Drosseln können einen Strömungsquerschnitt aufweisen, welcher eine Entlüftung der zugeordneten Steuereingänge des Auswahlventils verlangsamt. Insbesondere kann vorgesehen sein, dass gegebenenfalls ein Entlüften der Steuerleitung oder Steuerleitungen langsamer erfolgt als ein Entlüften der damit verbundenen Ventilausgänge und/oder zugeordneter Versorgungsleitungen. Die Steuerleitungen können pneumatisch jeweils bezüglich des zugeordneten Ventilausgangs des Auswahlventils hinter der zugeordneten Lufttrocknerpatrone und/oder dem Ausgangsanschluss der zugeordneten Anschlussvorrichtung angeordnet sein, so dass an den Steuereingängen getrocknete Luft anliegt. Damit kann einem eventuellen Vereisen des Auswahlventils entgegengewirkt werden. Alternativ oder zusätzlich zu einem oder mehreren Steuereingängen kann das Ventilelement elektromagnetisch betätigbar sein.

Die Erfindung betrifft auch ein Lufttrocknermodul mit einem oben beschriebenen Lufttrockneradaptermodul und einer mit der ersten Anschlussvorrichtung verbundenen ersten Lufttrocknerpatrone und einer mit der zweiten Anschlussvorrichtung verbundenen zweiten Lufttrocknerpatrone.

Außerdem betrifft die Erfindung eine Druckluftversorgungseinrichtung für Nutzfahrzeuge mit einem derartigen Lufttrocknermodul. Die Druckluftversorgungseinrichtung kann insbesondere einen Kompressor aufweisen, der mit dem Ventileingang des Auswahlmoduls oder mit einem Moduleingang des Lufttrocknermoduls verbunden ist. Die Druckluftversorgungseinrichtung kann eine Luftaufbereitungsanlage mit einem Mehrkreisschutzventil und einer elektronischen Steuereinrichtung oder ein Mehrkreisschutzventil aufweisen.

Die Erfindung wird nun mit Bezug auf die begleitenden Zeichnungen anhand bevorzugter Ausführungsformen beispielhaft erläutert

Es zeigen:
- Figur 1: eine schematische Ansicht eines Lufttrocknermoduls;
- Figur 2: eine schematische Ansicht einer Luftaufbereitungsanlage mit einem Lufttrocknermodul;
- Figur 3: eine weitere schematische Ansicht einer Luftaufbereitungsanlage mit einem Lufttrocknermodul; sowie
- Figur 4: ein Beispiel für ein Auswahlventil.

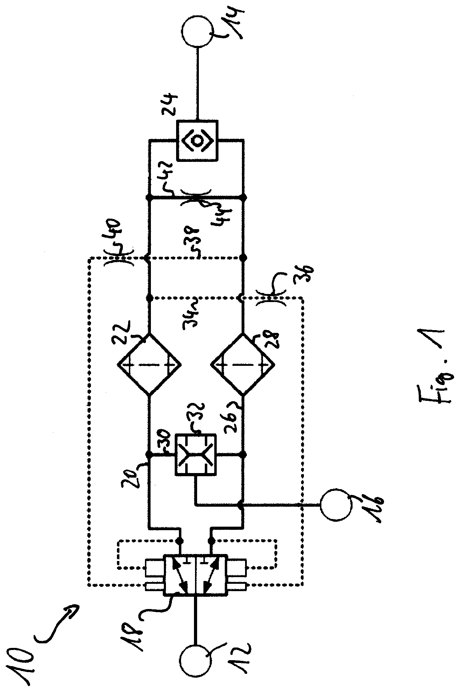

Figur 1 zeigt schematisch ein Lufttrocknermodul 10. Das Lufttrocknermodul 10 weist einen Moduleingang 12, einen Modulausgang 14 und einen Luftablass 16 auf. Der Moduleingang 12 kann mit einer Druckluftzufuhr verbunden sein, beispielsweise mit einem Kompressor oder mit einer Zufuhrleitung einer Luftaufbereitungsanlage. Der Modulausgang 14 kann beispielsweise mit einer Luftaufbereitungsanlage und/oder einer Druckluftverteilungseinrichtung wie einem Mehrkreisschutzventil verbunden oder verbindbar sein. Der Luftablass 16 kann eine Verbindung zur Atmosphäre herstellen. Mit dem Eingang 12 ist ein Auswahlventil 18 verbunden. Das Auswahlventil 18 weist einen mit dem Drucklufteingang 12 verbundenen Ventileingang, einen ersten Ventilausgang sowie einen zweiten Ventilausgang auf. Das Auswahlventil 18 ist derart ausgebildet, dass es in einer ersten Schaltstellung den Ventileingang fluidleitend mit dem ersten Ventilausgang verbindet und in einer zweiten Schaltstellung den Ventileingang mit dem zweiten Ventilausgang. An den ersten Ventilausgang ist über eine erste Versorgungsleitung 20 ein erster Lufttrockner 22 angeschlossen. Über den ersten Lufttrockner 22 ist die erste Versorgungsleitung 20 an einen ersten Eingang eines Ausgangsventils angeschlossen, welches in diesem Beispiel als Select-High-Ventil 24 ausgebildet ist. Eine zweite Versorgungsleitung 26 ist an den zweiten Ventilausgang des Auswahlventils 18 angeschlossen. In der zweiten Versorgungsleitung 26 ist ein zweiter Lufttrockner 28 angeordnet. Über den zweiten Lufttrockner 28 ist die zweite Versorgungsleitung 26 an einen weiteren Eingang des Select-High-Ventils 24 angeschlossen. Der Ausgang des Select-High-Ventils 24 ist mit dem Modulausgang 14 des Lufttrocknermoduls 10 verbunden. Das Select-High-Ventil 24 ist somit als 3/2-Wegeventil ausgebildet. Es ist derart konstruiert, dass es denjenigen seiner Eingänge mit seinem Ausgang verbindet, auf dem der höhere Druck liegt. Ist zum Beispiel der Druck in der ersten Versorgungsleitung 22 höher als der Druck in der zweiten Versorgungsleitung 26, wird das Select-High-Ventil 24 die Versorgungsleitung 22 mit dem Modulausgang 14 verbinden. Die Lufttrockner 22 und 28 stehen hier jeweils symbolisch für eine an einer ersten Anschlussvorrichtung angeschlossene erste Lufttrocknerpatrone und eine zweite Anschlussvorrichtung angeschlossene zweite Lufttrocknerpatrone. Das Lufttrocknermodul 10 kann dabei aus den separaten Komponenten Adaptermodul, erste Lufttrocknerpatrone und zweite Lufttrocknerpatrone zusammengesetzt sein.

Zwischen dem ersten Ventilausgang des Auswahlventils 18 und dem ersten Lufttrockner 22 ist eine Abzweigung 30 vorgesehen, welche die erste Verbindungsleitung 20 mit der zweiten Verbindungsleitung 26 oder den erste Ventilausgang mit dem zweiten Ventilausgang verbindet. Die Leitung 30 ist mit der Verbindungsleitung 28 an einem Punkt zwischen dem zweiten Ventilausgang des Auswahlventils 18 und dem zweiten Lufttrockner 28 verbunden. In der Abzweigung 30 ist als Ablassventil ein Select-Low-Ventil 32 angeordnet. Ein erster Eingang des Select-Low-Ventils 32 ist über die Abzweigung 30 mit der ersten Versorgungsleitung 20 verbunden. Ein zweiter Eingang des Select-Low-Ventils 32 ist über die Abzweigung 30 mit der zweiten Versorgungsleitung 26 verbunden. Ein Ausgang des Select-Low-Ventils 32 ist mit dem Luftablass 16 des Lufttrocknermoduls 10 verbunden. Das Select-Low-Ventil 32 ist derart ausgebildet, dass es denjenigen seiner Eingänge mit seinem Ausgang verbindet, an dem der niedrigere Druck herrscht. Liegt beispielsweise in der Versorgungsleitung 28 ein niedrigerer Druck vor als in der Versorgungsleitung 20, so nimmt das Select-Low-Ventil einen ersten Schaltzustand ein, in dem es die Versorgungsleitung 26 mit dem Ablass 16 verbindet. Im ersten Schaltzustand sperrt das Select-Low-Ventil 32 den mit der Versorgungsleitung 20 verbundenen Eingang ab. In einem zweiten Schaltzustand verbindet das Select-Low-Ventil 32 die erste Versorgungsleitung 20 mit dem Luftablass 16. Im zweiten Schaltzustand ist der mit der zweiten Versorgungsleitung 28 verbundene Eingang des Select-Low-Ventils 32 abgesperrt. Den zweiten Schaltzustand nimmt das Select-Low-Ventil 32 ein, wenn an seinen mit der Versorgungsleitung 20 verbundenen Eingang ein niedrigerer Druck anliegt als an seinem mit der zweiten Versorgungsleitung 26 verbundenen Eingang. Zwischen dem ersten Lufttrockner 22 und dem Select-High-Ventil 24 zweigt von der ersten Versorgungsleitung 20 eine erste Steuerleitung 34 ab. Die erste Steuerleitung 34 ist mit einem zweiten Steuergang des Auswahlventils 18 verbunden. In der ersten Steuerleitung 34 ist eine Drossel 36 vorgesehen. Zwischen dem zweiten Lufttrockner 28 und dem Select-High-Ventil 24 zweigt eine zweite Steuerleitung 38 ab, welche mit einem ersten Steuereingang des Auswahlventils 18 verbunden ist. In der zweiten Steuerleitung 38 ist eine zweite Drossel 40 vorgesehen. Somit liegt am ersten Steuereingang der Druck in der zweiten Versorgungsleitung 26 an, und am zweiten Steuereingang der Druck in der ersten Versorgungsleitung 20. Des Weiteren ist eine Regenerierungsleitung 42 mit einer Regenerierungsdrossel 44 vorgesehen, welche die erste Versorgungsleitung 20 und die zweite Versorgungsleitung 26 miteinander verbindet. Die Regenerierungsleitung 42 ist dabei zwischen dem ersten Lufttrockner 22 und dem Select-High-Ventil 24 mit der ersten Versorgungsleitung 20 verbunden und zwischen dem zweiten Lufttrockner 28 und dem Select-High-Ventil 24 mit der zweiten Versorgungsleitung 26 verbunden. In diesem Beispiel ist die Regenerierungsleitung 42 diejenige Abzweigung von der ersten Versorgungsleitung 20 beziehungsweise von der zweiten Versorgungsleitung 26, welche am nächsten am Select-High-Ventil 24 angeordnet ist. Es ist anzumerken, dass das hier gezeigt Beispiel rein pneumatische Schaltelemente und pneumatisch angesteuerte Ventile vorsieht. Eine elektronische Schaltung der Elemente des Lufttrocknermoduls 10 ist demnach nicht notwendig.

Wird in einem Förderbetrieb über den Luftdruckeingang 12, beispielsweise den Kompressor, Druckluft zugeführt, nimmt das Auswahlventil 18 eine Schaltstellung ein, in der sein Ventileingang mit dem ersten Ventilausgang oder mit dem zweiten Ventilausgang verbunden ist. Der andere Ventilausgang wird abgesperrt. Im Folgenden wird davon ausgegangen, dass das Auswahlventil 18 die erste Schaltstellung eingenommen hat, in welcher es den Drucklufteingang 12 mit der ersten Versorgungsleitung 20 verbindet. Demnach baut sich ein Druck in der ersten Versorgungsleitung 20 auf, welcher größer ist als der Druck in der zweiten Versorgungsleitung 28. Somit nimmt das Select-Low-Ventil 32 seine erste Schaltstellung ein, in welcher es die zweite Versorgungsleitung 26 mit dem Luftablass 16 verbindet. Der mit der ersten Versorgungsleitung 20 verbundene Eingang des Select-Low-Ventils 32 ist abgesperrt. Das Select-High-Ventil 24 nimmt im Gegensatz dazu seine erste Schaltstellung ein, in welcher es seinen mit der Versorgungsleitung 20 verbundenen Eingang mit seinem Ausgang verbindet, so dass die erste Versorgungsleitung 20 mit dem Modulausgang 14 verbunden ist. So kann Druckluft von dem Kompressor über das Auswahlventil 18 und die erste Versorgungsleitung 20 mit dem ersten Lufttrockner 22 über das Select-High-Ventil 24 beispielsweise zu einer Luftaufbereitungseinrichtung oder zu einem Mehrkreisschutzventil strömen. Das Select-Low-Ventil 32 und das Select-High-Ventil 24 nehmen ihre Schaltstellung jeweils rein pneumatisch ein, ohne elektrisch angesteuert zu sein. Der mit der zweiten Versorgungsleitung 26 verbundene Ausgang des Auswahlventils 18 ist in dieser Schaltstellung gesperrt. Somit kann über die Regenerierungsleitung 42 und die Regenerierungsdrossel 44 Druckluft aus der ersten Versorgungsleitung 22 in die zweite Versorgungsleitung 26 strömen. Da der mit der zweiten Versorgungsleitung 26 verbundene Eingang des Select-High-Ventils 24 abgesperrt ist, strömt die Luft über den zweiten Lufttrockner 28 und das Select-Low-Ventil 32 zum Ablass 16. Während durch den ersten Lufttrockner 22 Druckluft in einer Versorgungsrichtung zur Luftaufbereitungsanlage strömt, wird der zweite Lufttrockner 28 in der umgekehrten Richtung durchströmt und somit regeneriert. Durch die Regenerierungsdrossel 44 wird verhindert, dass ein zu großer Luftstrom von der für die Luftaufbereitungseinrichtung beziehungsweise vorgesehenen Luft abgezweigt wird. Ist bei einem Förderbetrieb des Kompressors das Auswahlventil 18 in die zweite Schaltstellung geschaltet, wird entsprechend über die zweite Versorgungsleitung 26 Druckluft über das Select-High-Ventil 24 zur Luftaufbereitungseinrichtung gefördert, während der erste Lufttrockner 22 und die erste Versorgungsleitung 20 über das Select-Low-Ventil 32 und den Luftablass 16 regeneriert wird. Welche der ersten Versorgungsleitung 20 und der zweiten Versorgungsleitung 26 das Auswahlventil 18 bei Inbetriebnahme als Förderleitung auswählt, kann von verschiedenen Bedingungen wie Einbaulage des Ventils, Zustand des Auswahlventils vor Inbetriebnahme beziehungsweise während der letzten Außer-Betriebnahme und ähnlichem abhängen. Es ist anzumerken, dass die Regenerierung des einen Lufttrockners unabhängig von der Luftaufbereitungsanlage beziehungsweise einer elektronischen Steuereinrichtung erfolgt. Insbesondere wird der eine Lufttrockner immer regeneriert, während über den anderen Lufttrockner Druckluft gefördert wird.

Wird nun der Kompressor durch die Luftaufbereitungseinrichtung in seinen Energiesparmodus geschaltet, weil beispielsweise ein gewünschter Betriebsdruck in der Luftaufbereitungseinrichtung erreicht ist, baut sich der in der ersten Steuerleitung 34 beziehungsweise in der zweiten Steuerleitung 38 abstehende Druck durch die zugeordnete erste Drossel 36 und die zweite Drossel 40 verhältnismäßig langsam ab. War vor dem Umschalten des Kompressors in seinen Energiesparmodus die erste Versorgungsleitung die Förderleitung, steht in der ersten Steuerleitung 34 ein höherer Druck an als in der zweiten Steuerleitung 38. Da die erste Versorgungsleitung 20 und die zweite Versorgungsleitung 26 schneller entlüftet sind, kann über die erste Versorgungsleitung 20 kein großer Gegendruck auf das Auswahlventil 18 ausgeübt werden. Somit schaltet das Auswahlventil 18 in seinen zweiten Schaltzustand um, in welchem es den Drucklufteingang 12 mit der zweiten Versorgungsleitung 26 verbindet. Sollte die zweite Versorgungsleitung 26 vor Umschalten des Kompressors in seinen Energiesparmodus die Förderleitung gewesen sein, so schaltet entsprechend das Auswahlventil 18 in seine erste Schaltstellung um. Wird nun der Kompressor über die Luftaufbereitungseinrichtung wieder in seinen Betriebszustand versetzt, in welchem er Druckluft fördert, sind die Rollen der Versorgungsleitungen 20, 26 vertauscht. Durch das Umschalten des Auswahlventils 18 wird nun derjenige Lufttrockner regeneriert, welcher zuvor von zu trocknender Luft durchströmt wurde. Andererseits wird der regenerierte Lufttrockner nun von zur Luftaufbereitungsanlage geförderte Luft durchströmt, die er filtert und/oder trocknet. War wie oben beschrieben die erste Versorgungsleitung 20 diejenige, über welche Druckluft zur Luftaufbereitungseinrichtung gefördert wurde, während über die zweite Versorgungsleitung 26 der zweite Lufttrockner 28 regeneriert wurde, wird nun Druckluft über die zweite Versorgungsleitung 26 und den Lufttrockner 28 gefördert, während der erste Lufttrockner 22 in der ersten Versorgungsleitung 20 regeneriert wird. Es ist anzumerken, dass durch die umgekehrten Druckverhältnisse in den Versorgungsleitungen 20, 26 auch das Select-High-Ventil 24 und das Select-Low-Ventil 32 jeweils umgeschaltet sind. Wird nämlich die Versorgungsleitung 28 über den Moduleingang 12 mit Druckluft versorgt, weist sie einen höheren Druck ab als die erste Versorgungsleitung 20. Somit stellt sich das Select-High-Ventil 24 in seine zweite Schaltstellung, in welcher es seinen mit der zweiten Versorgungsleitung 26 verbundenen Eingang mit seinem Ausgang und somit mit dem Modulausgang 14 verbindet. Das Select-Low-Ventil 32 hingegen verbindet die erste Versorgungsleitung 20 mit dem Luftablass 16.

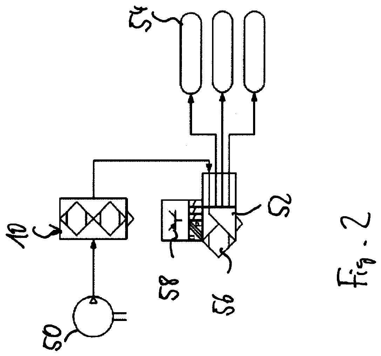

Figur 2 zeigt ein Beispiel für eine Anordnung eines Lufttrocknermoduls in einer Druckluftversorgungseinrichtung. Im gezeigten Beispiel ist ein Lufttrocknermodul 10, bei dem es sich um das oben im Zusammenhang mit Figur 1 gezeigte Lufttrocknermodul 10 handeln kann, mit einer Ausgangsleitung eines Kompressors 50 verbunden. Insbesondere ist das Lufttrocknermodul 10 zwischen den Kompressor 50 und eine Luftaufbereitungsanlage 52 geschaltet. Die Luftaufbereitungsanlage 52 ist dazu vorgesehen, von dem Kompressor 50 bereitgestellte Druckluft an Fahrzeugreservoirs und Verbraucher 54 zu verteilen, nachdem sie getrocknet wurde. Es kann vorgesehen sein, dass neben dem Lufttrocknermodul 10 noch standardmäßig ein Lufttrockner beziehungsweise eine Lufttrocknerpatrone 56 vorgesehen ist, die auf herkömmliche Weise an der Luftaufbereitungsanlage 52 befestigt sein kann. Die Luftaufbereitungsanlage 52 kann ferner eine Steuereinrichtung 58 aufweisen, die beispielsweise den Kompressor in seinen Energiesparmodus zu schalten vermag. In diesem Bespiel ist somit keine Veränderung an der Luftaufbereitungsanlage 52 notwendig, da das Lufttrocknermodul 10 vor die Luftaufbereitungsanlage 52 geschaltet ist. Statt des Lufttrockners 56 kann in diesem Beispiel auch einfach eine Abdeckung der üblicherweise zum Anschließen des Lufttrockners 56 vorgesehenen Anschlüsse an der Luftaufbereitungsanlage 52 vorgesehen sein.

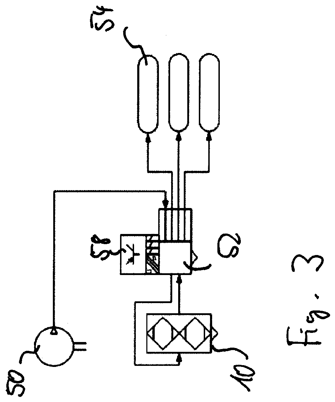

Figur 3 zeigt eine weitere Einsatzmöglichkeit für ein Lufttrocknermodul 10 für eine Druckluftversorgungseinrichtung. Auch hier ist ein Kompressor 50 vorgesehen, der mit einer Luftaufbereitungsanlage 52 verbunden ist, welcher er Druckluft zuführen kann. Die Luftaufbereitungsanlage 52 ist mit Druckluftreservoirs und Druckluftverbrauchersystemen 54 des Fahrzeugs verbunden und kann Druckluft auf sie verteilen. Eine Steuereinrichtung 58 ist zur Ansteuerung der Luftaufbereitungsanlage 52, zur Steuerung der Verteilung von Druckluft auf die Verbrauchersysteme 54 und zur Ansteuerung des Kompressors 50 beziehungsweise einer Regenerierung des Systems vorgesehen. In diesem Beispiel ist das Lufttrocknermodul 10 anstelle einer herkömmlichen Lufttrocknerpatrone vorgesehen. Zwar hat das Lufttrocknermodul 10 aufgrund des Vorhandenseins zweier Lufttrocknerpatronen einen größeren Bauraumbedarf als der in Figur 2 gezeigte Lufttrockner 56, aber er kann über kompatible Anschlüsse verfügen und somit direkt an das Luftbehandlungssystem 52 angeschlossen werden. Unter Umständen kann eine geeignete Verschraubung beziehungsweise ein Bajonettschluss vorgesehen sein, mit dem das Lufttrocknermodul 10 an der Luftaufbereitungsanlage 52 befestigt werden kann.

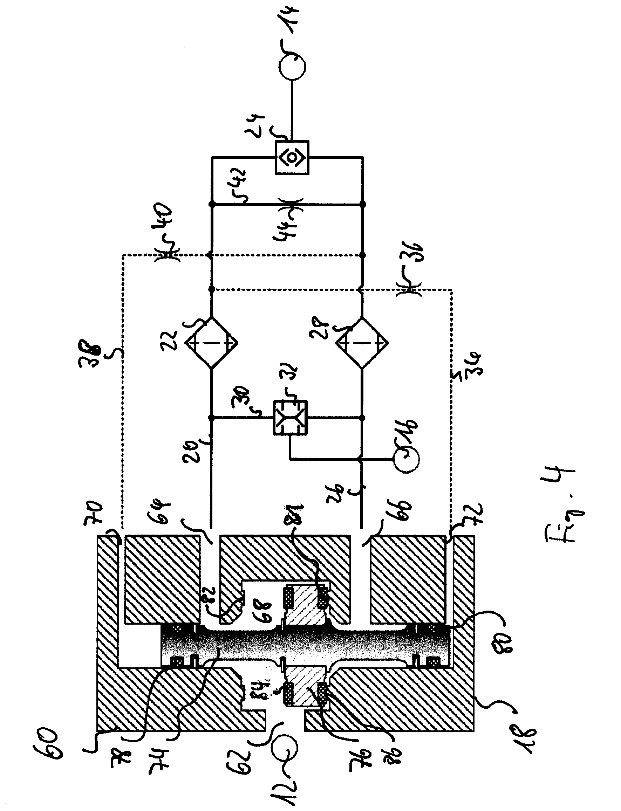

Figur 4 zeigt ein Beispiel für ein Auswahlventil 18. Bis auf die vergrößerte Darstellung des Auswahlventils 18 entspricht die in Figur 4 gezeigte Anordnung der in Figur 1 gezeigten Anordnung, so dass an dieser Stelle auf eine detaillierte Beschreibung der dort erwähnten Elemente verzichtet wird. Das Auswahlventil 18 weist ein Ventilgehäuse 60 auf. Im Ventilgehäuse 60 sind ein Ventileingang 62 sowie ein erster Ventilausgang 64 und ein zweiter Ventilausgang 66 vorgesehen. Der erste Ventilausgang 64 ist mit der ersten Versorgungsleitung 20 verbunden, während der zweite Ventilausgang 66 mit der zweiten Versorgungsleitung 26 verbunden ist. Im Ventilkörper 60 ist ein Ventilraum 68 ausgebildet, in welchen der Ventileingang 62, der erste Ventilausgang 64 und der zweite Ventilausgang 66 münden. Ferner sind ein erster Steuereingang 70 und ein zweiter Steuereingang 72 vorgesehen, die ebenfalls jeweils in den Ventilraum 68 münden. Der erste Steuereingang 70 ist über die zweite Steuerleitung 38 und die zweite Drossel 40 mit der zweiten Versorgungsleitung 26 und somit mit dem zweiten Ventilausgang 66 verbunden. Der zweite Steuereingang 72 ist über die erste Steuerleitung 34 und die erste Drossel 36 mit der ersten Versorgungsleitung 20 und somit mit dem ersten Ventilausgang 64 verbunden. In Ventilraum 68 ist ferner eine Kolbenstange 74 aufgenommen. An der Kolbenstange 74 ist ein Ventilkolben 76 befestigt. Die Kolbenstange 74 erstreckt sich in einen mit dem ersten Steuereingang 70 verbundenen Teil des Ventilraums 68 hinein. Analog erstreckt sich die Ventilstange 74 in einen mit dem zweiten Steuereingang 72 verbundenen Teil des Ventilraums 68 hinein. An jedem Ende der Ventilstange 74 ist jeweils eine Dichtung 78 beziehungsweise eine Dichtung 80 vorgesehen. Die Dichtung 78 dichtet den ersten Steuereingang 70 gegen den ersten Ventilausgang 64, den Ventileingang 62, sowie den zweiten Ventilausgang 66 und den zweiten Steuereingang 72 ab. Die Dichtung 80 dichtet den zweiten Steuereingang 72 gegen die anderen Ein- und Ausgänge des Auswahlventils 18 ab. Der Kolben 76 ist mittig an der Kolbenstange 74 angeordnet. Die Kolbenstange 74 kann sich mit dem Kolben 76 innerhalb des Ventilraums 68 hin- und herbewegen. Insbesondere kann die Ventilstange 74 mit dem Ventilkolben 76 eine erste Schaltstellung einnehmen, in welcher der Ventilkolben 76 an einem an einer Wandung des Ventilraums 68 ausgebildeten ersten Ventilsitz 81 anschlägt. In dieser ersten Schaltstellung sperrt der Ventilkolben 76 den zweiten Ventilausgang 66 vom Ventileingang 62 ab. Es ist ein zweiter Ventilsitz 82 vorgesehen, der ebenfalls an einer Wandung des Ventilraums 68 ausgebildet ist. In der zweiten Schaltstellung kann der Ventilkolben 76 am zweiten Ventilsitz 82 anliegen. In dieser zweiten Schaltstellung sperrt der Ventilkolben 76 den Ventileingang 62 gegenüber dem ersten Ventilausgang 64 ab. Am Kolben 76 können beidseitig geeignete Dichtungen 84, 86 vorgesehen sein, um eine Abdichtung gegenüber dem entsprechenden Ventilsitz 81, 82 zu erlauben. Wie aus Figur 4 zur erkennen ist, haben der erste Ventilausgang 64 und der zweite Ventilausgang 66 zusammen mit dem ersten Steuereingang 70 und dem zweiten Steuereingang 72 eine Steuer- oder Schaltfunktion. Denn wie mit Bezug auf Figur 1 beschrieben, ist das Auswahlventil 18 in der ersten Schaltstellung derart geschaltet, dass die erste Versorgungsleitung 20 mit dem ersten Ventilausgang 64 verbunden ist, während der erste Steuereingang 70 mit der zweiten Versorgungsleitung 26 verbunden ist. Der zweite Ventilausgang 66 ist mit der zweiten Versorgungsleitung 28 verbunden und der zweite Steuereingang 72 ist mit der ersten Versorgungsleitung 20 verbunden. Dies bedeutet, dass während eines Normalbetriebs, in dem über eine der Versorgungsleitungen 20, 26 Druckluft gefördert wird, der höhere Druck der Förderleitung am zugehörigen Ventilausgang ansteht. Da dieser hohe Druck auch auf die hohe Querschnittsfläche des Kolbens 76 wirkt, wird im Förderbetrieb verhindert, dass sich das Auswahlventil 18 aufgrund eines an einem der Schalteingänge 70, 72 anstehenden Drucks umschaltet. In Figur 4 ist beispielsweise der Zustand gezeigt, in welcher das Auswahlventil 18 die erste Schaltstellung einnimmt. Somit ist der erste Ventilausgang 64 mit dem Ventileingang 62 verbunden, und unter hohem Druck stehende Luft wird vom Kompressor in die erste Versorgungsleitung 20 eingespeist. Über die Steuerleitung 34 steht dieser Druck auch am zweiten Steuereingang 72 an. Trotz des Drucks am Steuereingang 72 kann der Kolben 76 aber nicht in die andere Schaltstellung gebracht werden, da der im Ventilraum 68 herrschende Druck gleich groß ist wie der Druck in der Steuerleitung 34, aber auf eine größere Fläche wirkt. Erst dann, wenn der Kompressor in einen Energiesparmodus geschaltet wird, fällt der Druck in der ersten Versorgungsleitung 20 und im Ventilraum 68 ab. Auch der Druck in der Steuerleitung 34 fällt entsprechend ab. Da in der Steuerleitung 34 allerdings eine Drossel vorgesehen ist, fällt der Druck darin langsamer ab als in der ersten Versorgungsleitung 20. Insbesondere ist die Drossel 36 derart eingestellt, dass der Druckabbau derart erfolgt, dass bei hinreichend abgefallenem Druck in der ersten Versorgungsleitung 20 beziehungsweise im Ventilraum 68 noch ein genügender Restdruck in der Steuerleitung 34 ansteht, dass der Kolben 76 in die andere Schaltstellung gebracht werden kann. Am Steuereingang 70 steht der niedrige Druck in der zur Regenerierung verwendeten zweiten Versorgungsleitung 26 an, der durch den Druck am Steuereingang 72 leicht überwunden wird. Somit schaltet das Auswahlventil 18 automatisch auf rein pneumatische Art und Weise zwischen den Versorgungsleitungen 20, 26 um, wenn der Moduleingang entlüftet wird. Aus der zweiten Schaltstellung erfolgt eine Umschaltung analog. Somit kann das Adaptermodul mit nur einem Modulausgang und einem Moduleingang einen Wechsel zwischen den Lufttrocknerpatronen erreichen, ohne dass weitere Steuerleitungen oder Anschlüsse notwendig sind.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Lufttrocknermodul
- 12: Moduleingang
- 14: Modulausgang
- 16: Luftablass
- 18: Auswahlventil
- 20: erste Versorgungsleitung
- 22: erster Lufttrockner
- 24: Select-High-Ventil
- 26: zweite Versorgungsleitung
- 28: zweiter Lufttrockner
- 30: Abzweigungsleitung
- 32: Select-Low-Ventil
- 34: erste Steuerleitung
- 36: erste Drossel
- 38: zweite Steuerleitung
- 40: zweite Drossel
- 42: Regenerierungsleitung
- 44: Regenerierungsdrossel
- 50: Kompressor
- 52: Luftaufbereitungsanlage
- 54: Verbrauchersysteme
- 56: Lufttrocknerpatrone
- 58: Steuereinrichtung
- 60: Ventilgehäuse
- 62: Ventileingang
- 64: erster Ventilausgang
- 66: zweiter Ventilausgang
- 68: Ventilraum
- 70: erster Steuereingang
- 72: zweiter Steuereingang
- 74: Ventilstange
- 76: Ventilkolben
- 78: Dichtung
- 80: Dichtung
- 81: erster Ventilsitz
- 82: zweiter Ventilsitz
- 84: Dichtung
- 86: Dichtung

## Patentansprüche

1. Lufttrockneradaptermodul für Nutzfahrzeuge zur Aufnahme einer ersten Lufttrocknerpatrone (22) und einer zweiten Lufttrocknerpatrone (28), wobei das Lufttrockneradaptermodul umfasst:
eine erste Anschlussvorrichtung zum Anschluss der ersten Lufttrocknerpatrone (22);
eine zweite Anschlussvorrichtung zum Anschluss der zweiten Lufttrocknerpatrone (28);
ein Auswahlventil (18) mit einem Ventileingang (62), einem ersten Ventilausgang (64) und einem zweiten Ventilausgang (66), wobei der erste Ventilausgang (64) mit der ersten Anschlussvorrichtung verbunden oder verbindbar ist, der zweite Ventilausgang (66) mit der zweiten Anschlussvorrichtung verbunden oder verbindbar ist und der Ventileingang (64) für eine Druckluftzufuhr verbunden oder verbindbar ist; wobei das Auswahlventil (18) eine erste Schaltstellung aufweist, in welcher der Ventileingang (62) mit dem ersten Ventilausgang (64) verbunden ist, sowie eine zweite Schaltstellung, in welcher der Ventileingang (62) mit dem zweiten Ventilausgang (66) verbunden ist
wobei ferner ein Modulausgang (14) des Lufttrockneradaptermoduls umschaltbar mit der ersten Anschlussvorrichtung oder der zweiten Anschlussvorrichtung verbunden oder verbindbar ist
**dadurch gekennzeichnet,**
**dass** das Auswahlventil (18) abhängig von einem Betriebsmodus eines mit dem Ventileingang (62) verbundenen oder verbindbaren Kompressors zwischen seinen Schaltstellungen umschaltet oder umgeschaltet wird, wobei das Lufttrockneradaptermodul derart ausgebildet ist, dass das Auswahlventil eine andere Schaltstellung einnimmt, wenn der Kompressor in seinen Energiesparmodus schaltet oder der Druck am Ventileingang (62) des Auswahlventils (18) abfällt und/oder
**dass** das Auswahlventil (18) eine andere Schaltstellung einnimmt, wenn über den Modulausgang (16) ein pneumatisches Signal eintritt.

2. Lufttrockneradaptermodul nach Anspruch 1, wobei das Auswahlventil (18) pneumatisch zum Umschalten zwischen der ersten Schaltstellung und der zweiten Schaltstellung ansteuerbar ist.

3. Lufttrockneradaptermodul nach Anspruch 1 oder 2, ferner umfassend ein Ausgangsventil (24), welches die erste Anschlussvorrichtung und/oder die zweite Anschlussvorrichtung mit dem Modulausgang (14) zu verbinden vermag.

4. Lufttrockneradaptermodul nach einem der Ansprüche 1 bis 3, wobei das Ausgangsventil (24) ein Select-High-Ventil ist.

5. Lufttrockneradaptermodul nach einem der Ansprüche 1 bis 4, ferner umfassend ein Ablassventil (32).

6. Lufttrockneradaptermodul nach einem der Ansprüche 1 bis 5, wobei das Lufttrockneradaptermodul einen ersten Schaltmodus aufweist, in welchem über die erste Lufttrocknerpatrone (22) Druckluft vom Ventileingang (62) des Auswahlventils (18) zum Modulausgang (14) geführt wird oder führbar ist, sowie einen zweiten Schaltmodus, in welchem über den zweiten Lufttrockner (28) Druckluft vom Ventileingang (62) des Auswahlventils (18) zum Modulausgang (14) geführt wird oder führbar ist.

7. Lufttrockneradaptermodul nach Anspruch 6, wobei das Lufttrockneradaptermodul dazu ausgebildet ist, im ersten Schaltmodus die zweite Lufttrocknerpatrone (28) zu regenerieren.

8. Lufttrockneradaptermodul nach Anspruch 6 der 7, wobei das Lufttrockneradaptermodul dazu ausgebildet ist, im ersten Schaltmodus zum Regenieren der zweiten Lufttrocknerpatrone (28) Druckluft aus einer Leitung (20) zu entnehmen, welche den ersten Lufttrockner (22) mit dem Modulausgang und/oder einem Ausgangsventil (24) verbindet.

9. Lufttrockneradaptermodul nach einem der Ansprüche 1 bis 8, wobei das Auswahlventil (18) einen ersten Steuereingang (70) aufweist, der pneumatisch mit dem zweiten Ventilausgang (66) verbunden oder verbindbar ist.

10. Lufttrocknermodul (10) für Nutzfahrzeuge mit einem Lufttrockneradaptermodul nach einem der Ansprüche 1 bis 9 und einer mit der ersten Anschlussvorrichtung verbundenen ersten Lufttrocknerpatrone (22) und einer mit der zweiten Anschlussvorrichtung verbundenen zweiten Lufttrocknerpatrone (28).

11. Druckluftversorgungseinrichtung für Nutzfahrzeuge mit einem Lufttrocknermodul (10) nach Anspruch 10.

## Claims

1. Air dryer adaptor module for utility vehicles, for receiving a first air dryer cartridge (22) and a second air dryer cartridge (28), such that the air dryer adaptor module comprises:
a first connection device for connecting the first air dryer cartridge (22);
a second connection device for connecting the second air dryer cartridge (28);
a selector valve (18) with a valve inlet (62), a first valve outlet (64) and a second valve outlet (66), such that the first valve outlet (64) is or can be connected to the first connection device, the second valve outlet (66) is or can be connected to the second connection device, and the valve inlet (64) is or can be connected to admit a compressed air supply; wherein the selector valve (18) has a first switched position in which the valve inlet (62) is connected to the first valve outlet (64) and a second switched position in which the valve inlet (62) is connected to the second valve outlet (66),
wherein, further, a module outlet (14) of the air dryer adaptor module is or can be switched over to be connected with the first or with the second connection device, **characterised in that**
depending on the operating mode of a compressor that is or can be connected to the valve inlet (62) the selector valve (18) is or has been switched between its switched positions, and the air dryer adaptor module is designed in such manner that the selector valve adopts a different switched position when the compressor is switched to its energy-saving mode or the pressure at the valve inlet (62) of the selector valve (18) falls, and/or
the selector valve (18) adopts another switched position when a pneumatic signal is received by way of the module outlet (16).

2. Air dryer adaptor module according to Claim 1, wherein the selector valve (18) can be controlled pneumatically to switch over between the first switched position and the second switched position.

3. Air dryer adaptor module according to Claims 1 or 2, further comprising an outlet valve (24) which can connect the first connection device and/or the second connection device to the module outlet (14).

4. Air dryer adaptor module according to any of Claims 1 to 3, wherein the outlet valve (24) is a 'select-high' valve.

5. Air dryer adaptor module according to any of Claims 1 to 4, further comprising a discharge valve (32).

6. Air dryer adaptor module according to any of Claims 1 to 5, wherein the air dryer adaptor module has a first switching mode in which, by way of the first air dryer cartridge (22), compressed air is or can be passed from the valve inlet (62) of the selector valve (18) to the module outlet (14), and a second switching mode in which, by way of the second air dryer (28), compressed air is or can be passed from the valve inlet (62) of the selector valve (18) to the module outlet (14).

7. Air dryer adaptor module according to Claim 6, wherein the air dryer adaptor module is designed, when in its first switching mode, to regenerate the second air dryer cartridge (28).

8. Air dryer adaptor module according to Claims 6 or 7, wherein the air dryer adaptor module is designed, when in its first switching mode for regenerating the second air dryer cartridge (28), to tap compressed air from a line (20), which line connects the first air dryer (22) to the module outlet and/or to an outlet valve (24).

9. Air dryer adaptor module according to any of Claims 1 to 8, wherein the selector valve (18) has a first control inlet (70), which is or can be connected pneumatically to the second valve outlet (66).

10. Air dryer module (10) for utility vehicles, with an air dryer adaptor module according to any of Claims 1 to 9 and a first air dryer cartridge (22) connected to the first connection device and a second air dryer cartridge (28) connected to the second connection device.

11. Compressed air supply device for utility vehicles, having an air dryer module (10) according to Claim 10.

## Revendications

1. Module adaptateur de dessiccateur d'air pour des véhicules utilitaires pour le logement d'une première cartouche (22) de dessiccateur d'air et d'une deuxième cartouche (28) de dessiccateur d'air, le module adaptateur de dessiccateur d'air comprenant :
un premier système de raccord pour raccorder la première cartouche (22) de dessiccateur d'air,
un deuxième système de raccord pour raccorder la deuxième cartouche (28) de dessiccateur d'air,
une soupape (18) de sélection ayant une entrée (62) de soupape, une première sortie (64) de soupape et une deuxième sortie (66) de soupape, la première sortie (64) de soupape étant reliée au premier système de raccord ou pouvant l'être, la deuxième sortie (66) de soupape étant reliée au deuxième système de raccord ou pouvant l'être, et l'entrée (64) de soupape étant reliée pour un apport d'air comprimé ou pouvant l'être, la soupape (18) de sélection ayant une première position de commutation, dans laquelle l'entrée (62) de soupape est reliée à la première sortie (64) de soupape, ainsi qu'une deuxième position de commutation, dans laquelle l'entrée (62) de soupape est reliée à la deuxième sortie (66) de soupape,
dans lequel, en outre, une sortie (14) du module adaptateur de dessiccateur d'air est reliée de manière commutable au premier système de raccord ou au deuxième système de raccord ou peut l'être,
**caractérisé**
**en ce que** la soupape (18) de sélection commute ou est commutée entre ses positions de commutation en fonction d'un mode de fonctionnement d'un compresseur relié à l'entrée (62) de soupape ou pouvant l'être, le module adaptateur de dessiccateur d'air étant constitué de manière à ce que la soupape de sélection prenne une autre position de commutation, lorsque le compresseur passe dans son mode d'économie d'énergie ou lorsque la pression à l'entrée (62) de la soupape (18) de sélection s'abaisse et/ou
**en ce que** la soupape (18) de sélection prend une autre position de commutation, lorsqu'un signal pneumatique entre par la sortie (16) du module.

2. Module adaptateur de dessiccateur d'air suivant la revendication 1, dans lequel la soupape (18) de sélection peut être commandée pneumatiquement pour commuter entre la première position de commutation et la deuxième position de commutation.

3. Module adaptateur de dessiccateur d'air suivant la revendication 1 ou 2, comprenant, en outre, une soupape (24) de sortie, qui permet de relier le premier système de raccord et/ou le deuxième système de raccord à la sortie (14) du module.

4. Module adaptateur de dessiccateur d'air suivant l'une des revendications 1 à 3, dans lequel la soupape (24) de sortie est une soupape select-high.

5. Module adaptateur de dessiccateur d'air suivant l'une des revendications 1 à 4, comprenant, en outre, une soupape (32) de purge.

6. Module adaptateur de dessiccateur d'air suivant l'une des revendications 1 à 5, dans lequel le module adaptateur de dessiccateur d'air a un premier mode de commutation, dans lequel, par la première cartouche (22) de dessiccateur d'air, de l'air comprimé est envoyé de l'entrée (62) de la soupape (18) de sélection à la sortie (14) du module ou peut l'être, ainsi qu'un deuxième mode de commutation, dans lequel, par le deuxième dessiccateur (28) d'air, de l'air comprimé est envoyé de l'entrée (62) de la soupape (18) de sélection à la sortie (14) du module ou peut l'être.

7. Module adaptateur de dessiccateur d'air suivant la revendication 6, dans lequel le module adaptateur de dessiccateur d'air est constitué pour, dans le premier mode de commutation, régénérer la cartouche (28) de dessiccateur d'air.

8. Module adaptateur de dessiccateur d'air suivant la revendication 6 ou 7, dans lequel le module adaptateur de dessiccateur d'air est constitué pour, dans le premier mode de commutation, pour régénérer la deuxième cartouche (28) de dessiccateur d'air, prélever de l'air comprimé d'un conduit (20), qui relie le premier dessiccateur (22) d'air à la sortie du module et/ou à une soupape (24) de sortie.

9. Module adaptateur de dessiccateur d'air suivant l'une des revendications 1 à 8, dans lequel la soupape (18) de sélection a une première entrée (70) de commande, qui est reliée pneumatiquement à la deuxième sortie (66) de soupape ou y peut l'être.

10. Module (10) de dessiccateur d'air pour des véhicules utilitaires, comprenant un module adaptateur de dessiccateur d'air suivant l'une des revendications 1 à 9 et une première cartouche (22) de dessiccateur d'air reliée au premier système de raccord et une deuxième cartouche (28) de dessiccateur d'air reliée au deuxième système de raccord.

11. Dispositif d'alimentation en air comprimé de véhicules utilitaires, comprenant un module (10) de dessiccateur d'air suivant la revendication 10.
